# EUROPEAN PATENT APPLICATION

(11) **EP 0 580 238 A1**
(43) Date of publication of application: **26.01.1994**
(21) Application number: 93202112.4
(22) Date of filing: 19.07.1993
(51) Int. Cl.: A22C 25/02, A22C 29/00

(54) **Machine for cleaning rigid-shell shellfish**

(30) Priority: 24.07.1992 IT RE920068 U
(71) Applicant: Belloni, Alessio Virginio, I-73047 Monteroni di Lecce (Lecce) (IT); Belloni, Vanessa Francesca, I-73047 Monteroni di Lecce (Lecce) (IT)
(72) Inventor: Virginio, Belloni, I-73047 Monteroni di Lecce (Lecce) (IT)
(74) Representative: Corradini, Corrado

(57) **Abstract**

A member (10) is provided rotating about a vertical axis (A) within a chamber (2) and comprises at least one implement (21) for mixing the shellfish; the bottom of the chamber (2) is closed by a perforated base (4) arranged to rotate rigidly and coaxially with the rotating member (10) to effect a rubbing action against the shellfish; within the chamber (2) there is provided to the side of the rotating member (10) at least one fixed element (26) arranged to interrupt the circular movement of the shellfish caused by the rotating member (10); in addition there are provided means (33, 34) for feeding water into the closed chamber (2), and an outlet (8).

## Description

The object of this invention is to provide a machine, in particular for domestic use (in the sense of being of a size such as to enable it to be used in a non-industrial environment, for example in restaurants), for rapidly and effectively cleaning rigid-shell shellfish, such as mussels, clams, cockles, oysters etc.

Machines specific for this purpose are unknown, and use is made of machines conceived and designed for other purposes, such as potato peeling machines; the result is that such machines are unsuitable for effectively cleaning rigid-shell shellfish because they break the shells, leading to death of the shellfish.

The said object is attained by the present invention as characterised in the claims.

The invention is described in detail hereinafter with the aid of the accompanying figures which illustrate one embodiment thereof.
Figure 1 is a vertical axial section through the machine of the invention.
Figure 2 is a side view of a detail of Figure 1 in the direction of the arrow II.
Figure 3 is a view of Figure 2 from above.
Figure 4 is a side view of a detail of a further embodiment of the machine.
Figure 5 is a plan view of Figure 5 from above.

The machine of the invention comprises firstly a closed chamber in which the shellfish to be cleaned are placed. Said chamber 2 is bounded laterally by a smooth closed cylindrical wall 3 and lowerly by a base 4.

Said base 4 comprises a support disc 6 with a lateral portion 61 in the form of a cylindrical wall joined by flat spokes 62 to a central hub 63.

On the upper surface of the disc 6 there are fixed a number of sheet metal elements 42 in the form of circular sectors concentric to the axis A; said sectors 42 are slightly dished with their concavity facing downwards, their purpose being to make the upper surface of the base 4 slightly undulated; said upper surface is formed by the sectors 42 and the upper surfaces of the spokes 62 between the sectors 42.

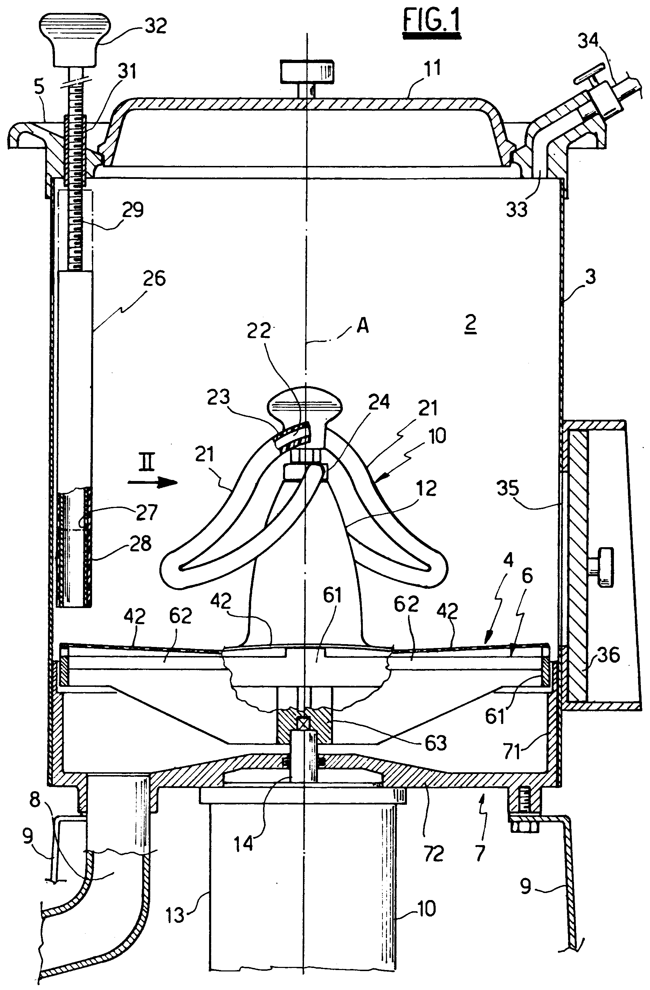

Said sectors 42 are provided with a plurality of through holes 41 preferably forming a sharp edge with the upper surface of the sectors 42 or possessing slight upwardly facing burrs resulting from their punching, so as to define a surface able to provide an effective rubbing action against the shellfish shells. In the embodiment shown in Figures 1-3, all the sectors 42 are perforated with holes 41.

Holes 43 of larger diameter are also provided to allow discharge of the larger-diameter cleaning residues.

Below the disc 6 there is a cup-shaped lower member 7 with its concavity facing upwards; said member 7 comprises a cylindrical lateral wall 71 against which the lower portion of the lateral wall 3 is fixed; an outlet 8 is provided in the base 72 of the member 7. The member 7 is fixed onto a support 9.

To the underside of the base 72 there is fixed a geared electric motor 13, the shaft 14 of which projects upwards through the base 72.

Said shaft 14 is torsionally and axially constrained to the hub 63 with the result that the disc 6 is supported and rotated by the shaft 14; the lateral portion 61 of the disc 6 is positioned a small distance from but not in contact with the upper portion of the lateral wall 71.

The upper edge of the wall 3 is surrounded by a rim 5 able to receive a lid 11 to upperly close the chamber 2.

Inside the chamber 2 there is a member 10 which rotates about the vertical axis A of the drive shaft 14, this axis coinciding with the axis of the chamber 2 and with the axis of rotation of the disc 6.

Said member 10 is fixed onto the disc 6 and rotates therewith. The member 10 comprises a support 12 fixed to the disc 6 and having a smooth outer surface which contracts in an upward direction.

In the embodiment shown in Figures 1-3 the member 10 comprises at least one (two are shown in the figures) implement 21 for mixing the shellfish placed in the chamber 2. Said implements 21 comprise a thin, elongate rigid bar 22 of shaped profile connected at one end to a head 24 fixed onto the upper end of the support 12 so as to project from it.

The bar 22 is suitably bent, and in particular can assume a shape of the type shown in the figures, in which it is bent back on itself so that the free end is close to the fixed end, and extends downwards. Said profile can vary on the basis of practical tests. The bar 22 is covered with a layer 23 of relatively soft elastic material such as PVC.

Inside the chamber 2 to the side of the rotating member 10 there is a fixed element 26 arranged to interrupt the circular movement of the shellfish caused by the rotating member 10. said fixed element 26 comprises a (tubular) vertical rod 27 covered with a layer 28 of relatively soft elastic material such as PVC, and is positioned close to the cylindrical wall 3. The upper end of the rod 27 is fixed to the lower end of a threaded vertical shaft 29 engaged in a threaded seat 31 fixed to the rim 5. An operating knob 32 is fixed to the upper end of the shaft 29. By rotating the knob 32 the element 26 can be raised and lowered to adjust its position relative to the base 4 of the chamber 2.

An inlet port 33 is provided in the highest part of the cylindrical wall 3 through the rim 5 and is connected to a water feed pipe 34.

An exit port 35 for extracting the shellfish is provided in the lateral wall 2 at the same level as the lower wall 4, and is closed by a door 36.

When in use, the required quantity of shellfish is firstly placed in the chamber 2 via the upper rim 5.

Then after upperly closing the chamber 2, and with the port 35 closed, the motor 13 is operated and the pipe 34 opened so that water is fed continuously.

The motor 13 thus rotates the base 4 and member 10, and these cause the shellfish contained in the chamber 2 to undergo a movement which is tendentially one of rotation about the axis A. During this movement the shellfish collide against the element 26 and are urged in an irregular manner towards the interior of the chamber, hence undergoing disordered mixing; in addition the particular shape of the implements 21 creates a mixing action between the shellfish. The result is that the shellfish undergo complex irregular movements and collide and slide continuously against each other to cause mutual mechanical separation of the extraneous particles which cover their shell. The shellfish also collide and slide against the base 4 which, because of its undulated shape which produces jolting and mixing and because of the presence of the sharp edged and/or burred holes 41, creates a further rubbing action which contributes to detaching the extraneous particles from the shell. In the meantime the water entering through the port 33 prevents the shellfish from heating and washes away the particles removed by the described mechanical action. The water plus particles pass below the base 4 and into the lower member 7, to be discharged to the outside through the port 8.

After a suitable time period, which can be programmed, the cleaning action terminates and the shellfish can be extracted through the port 35.

As a result of all the mechanical collision and rubbing of the shellfish against themselves and against the internal members of the chamber 2 the shells of the shellfish are cleaned effectively and rapidly by mechanical action.

In addition the dead shellfish are opened by said action and can hence be easily recognized and separated from the live shellfish.

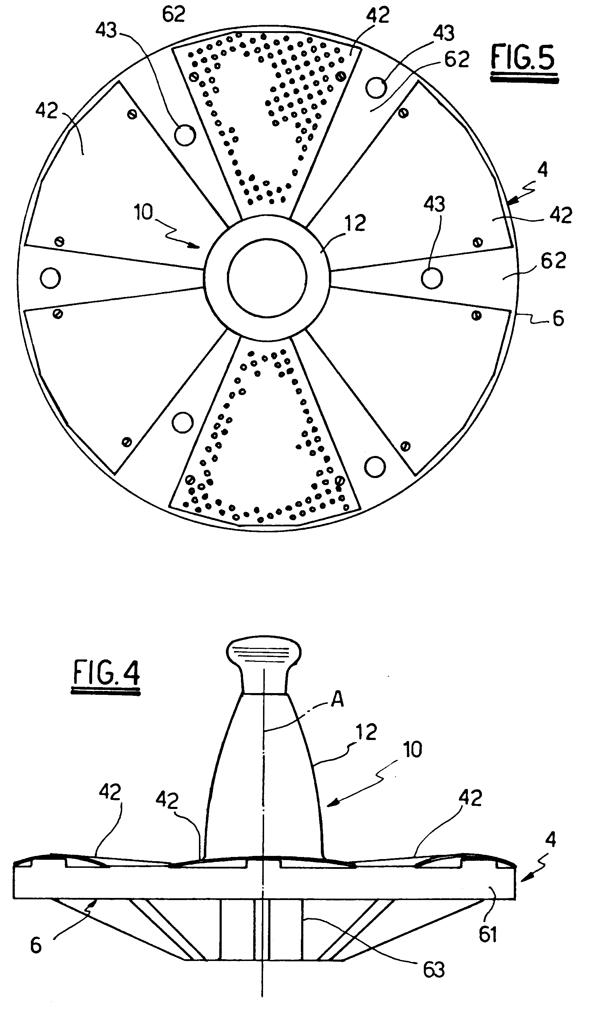

Figures 4 and 5 show a different embodiment of the base 4 and member 10, proposed in particular for cleaning hen clams, cockles, razor clams and oysters. This second embodiment differs from the preceding in that said mixing implements 21 are not provided and in addition only some (in particular two) of the sectors 42 are provided with holes 41 whereas the other sectors 42 are solid and smooth.

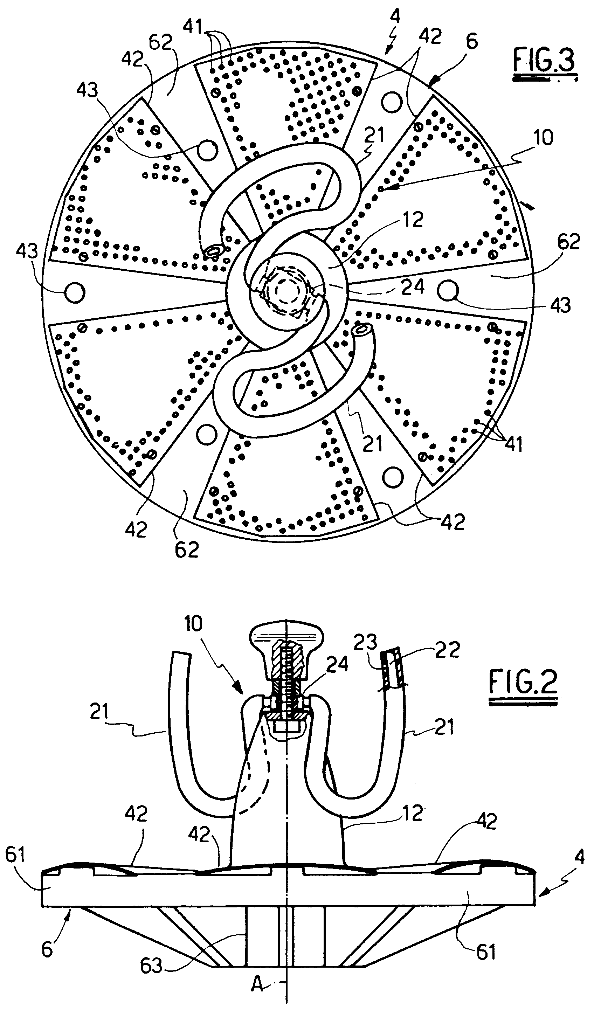

The remainder is substantially identical to that shown in Figures 2 and 3.

The operation of this second embodiment is also substantially identical to that heretofore described, with the difference that as the implements 21 are not provided, the shellfish mixing action is less vigorous and smoother.

Advantageously in the machine of the invention the described base 4-member 10 assemblies can be extracted and switched to be able to operate on different types of shellfish in the best manner. To achieve this it is necessary merely to detach the rim 5 (together with the element 26) and then vertically extract the assembly (4, 10), after which another assembly (4, 10) is inserted so that it engages the shaft 14.

Different members of known type, not shown in the figures, can also be inserted into the chamber 2 and engaged with the shaft 14, such as a member having an unperforated fixed base and a shaft rotating within the chamber 2 and carrying mixing arms for mixing and hence cleaning more delicate fish such as squid, octopus, crustacea and others while retained within a water bath.

The machine of the invention therefore also has the advantage that its members for cleaning the shellfish can be changed on the basis of the shellfish physical characteristics.

Numerous modifications of a practical and applicational nature can be made to the invention without leaving the scope of the inventive idea as hereinafter claimed.

## Claims

1. A machine for cleaning rigid-shell shellfish, comprising a chamber (2) in which the shellfish to be cleaned are placed, characterised by comprising:
- a closed cylindrical wall laterally bounding the chamber (2);
- a perforated base (4) defining the bottom of said chamber (2) and arranged to rotate about the vertical axis (A) of the chamber (2) to effect a rubbing action against the shellfish;
- at least one fixed element (26) positioned within said chamber (2) to the side of the axis (A) to interrupt the circular movement of the shellfish caused by the rotating member (10);
- means (33, 34, 8) for feeding water into the chamber (2) and for discharging it.

2. A machine as claimed in claim 1, characterised by comprising a member (10) rotating about the axis (A) of the chamber (2) and possessing at least one implement (21) for mixing the shellfish.

3. A machine as claimed in claim 2, characterised in that said mixing implement (21) comprises a thin elongate rigid bar (22) of shaped profile, covered with relatively soft elastic material (23).

4. A machine as claimed in claim 3, characterised in that said fixed element (26) comprises a vertical rod (27) covered with relatively soft elastic material (28) and positioned close to the cylindrical wall (3) of the chamber (2), the height of said rod (27) above the base (4) of the chamber (2) being adjustable.

5. A machine as claimed in claim 1, characterised in that said base (4) comprises several sectors (42) concentric to the axis (A) of the rotating member (10) and slightly dished with their concavity facing downwards, some or all of said sectors (42) being perforated.

6. A machine as claimed in claim 1, characterised in that said base (4) comprises holes (41) which form a sharp edge with the upper surface of the base (4) and or small upwardly facing burrs deriving from their punching.
